# EUROPEAN PATENT SPECIFICATION

(11) **EP 2 623 376 B1**
(45) Date of publication and mention of the grant of the patent: **02.11.2016**
(21) Application number: 11828745.7
(22) Date of filing: 08.09.2011
(51) Int. Cl.: B62D 15/02, G08G 1/133, B60R 21/00

(54) **PARKING ASSISTANCE DEVICE**
PARKHILFEVORRICHTUNG
DISPOSITIF D'ASSISTANCE AU STATIONNEMENT

(30) Priority: 28.09.2010 JP 2010216349
(43) Date of publication of application: 07.08.2013
(73) Proprietor: Aisin Seiki Kabushiki Kaisha, Aichi 448-8650 (JP)
(72) Inventor: WAKABAYASHI Haruki, Kariya-shi Aichi 448-8650 (JP); TANAKA Yu, Kariya-shi Aichi 448-8650 (JP); IGA Haruka, Kariya-shi Aichi 448-8650 (JP)
(74) Representative: TBK
(86) International application number: PCT/JP2011/070476
(87) International publication number: WO 2012/043184

(56) References cited:
- EP-A1- 1 403 138
- JP-A- 2004 203 068
- JP-A- 2005 216 255
- JP-A- 2007 127 459
- JP-A- 2008 030 705
- JP-A- 2009 111 946
- JP-A- 2010 184 588

## Description

### Technical Field

The present invention relates to a parking assistance device that assists driving operation of a driver by displaying an overhead image for allowing the driver to recognize the conditions around the vehicle of the driver at the time of running to park.

### Background Art

Conventionally a technique for assisting a driver by displaying on a monitor an overhead image viewed down from a virtual viewpoint above the vehicle of the driver (hereinafter simply referred to as the vehicle) to check the blind region of the vehicle is known. This overhead image is obtained by capturing images of the surroundings of the vehicle with a plurality of in-vehicle cameras and joining the captured images acquired by these in-vehicle cameras after performing viewpoint conversion into images viewed down from a virtual viewpoint above the vehicle. A way is devised to allow the driver at this time to easily perceive the conditions around the vehicle by compositing a vehicle image indicating the vehicle at the center of the overhead image displayed on the monitor, .

One known conventional parking assistance device using such an overhead image is a device with an image capturing means that acquires an image of surroundings of a vehicle; a storing means that stores, in advance, data of an image of the vehicle, and also stores data of the image acquired by the image capturing means; an image converting means that generates an overhead image of the vehicle taken from a virtual viewpoint thereabove from the image of the surroundings of the vehicle and the image of the vehicle; and an obstacle detecting means that detects an obstacle around the vehicle and calculates a distance from the vehicle to the obstacle and a relative speed therebetween as obstacle information, wherein if it is determined based on the obstacle information that the obstacle is a moving body, a scale of monitor display is changed so that the obstacle is displayed at an edge of the overhead image (e.g., see JP 2009-111946A (Patent Document 1)). With this device, when the vehicle approaches an obstacle therearound, the scale of the display of the overhead image is changed so that the obstacle is located at an end of the overhead image centered on the vehicle, and the overhead image is displayed in enlarged form. Thus the vehicle and the obstacle are clearly displayed, but because detection of an obstacle serves as a trigger for enlarged display, display is not enlarged unless an obstacle is detected. Therefore, the driver could feed anxious about not being able to rely only upon enlarged display.

There is also a known parking assistance device that performs monitor display while selectively switching, in accordance with current conditions or the like, between a first overhead image display mode in which a vehicle image is fixed in the center of the screen and an overhead image of surroundings of the vehicle changes with movement of the vehicle and a second overhead image display mode in which an overhead image of surroundings of the vehicle is fixed on the screen and the vehicle image position changes with movement of the vehicle (e.g., see JP 2007-183877A (Patent Document 2)). With this device, the vehicle image position in the display overhead image is different between the first overhead image display mode and the second overhead image display mode, but because display is not enlarged in accordance with the conditions, it is not specially indicated that the vehicle is in a position to which special attention should be paid.

### CITATION LIST

### Patent Document

Patent Document 1: JP 2009-111946A (paragraphs [0011-0057], FIG. 4)
Patent Document 2: JP 2007-183877A (paragraphs [0006-0021], FIG. 5)

Document EP 1 403 138 A1 discloses a parking assist device as defined in the preamble of claim 1. In particular, the surrounding of a movable body is monitored, wherein based on images captured by cameras, a three-dimensional environment of the surrounding of the movable body is generated, and it is judged whether or not the surrounding of the movable body satisfies a predetermined condition.

### Summary of Invention

### Technical Problem

In light of the foregoing situation, it is an object of the present invention to provide a parking assistance device with which a display overhead image is generated so that a region to which attention is to be paid is clearly displayed on a monitor at the time of running to park.

### Solution to Problem

This object is solved by a parking assistance device as defined in claim 1.

A feature of the parking assistance device according to the present invention is to include a parking route generating portion that generates a parking route to a set parking target position; an attention region determining portion that determines an attention region to which attention is to be paid at the time of running to park along the parking route and in which a corner end of the vehicle swings out significantly from the parking route when the center of the vehicle moves along the parking route and there is a higher possibility of the vehicle's touching with a nearby object; an overhead image generating portion that generates an overhead image through viewpoint conversion from a captured image acquired by a camera that captures an image of surroundings of a vehicle; and an image compositing portion that inputs, as a display image of the surroundings of the vehicle to be displayed on a monitor, an overhead image including the attention region that is in the overhead image generated by the overhead image generating portion, and generates a display overhead image by compositing a
vehicle image at a vehicle position in the input overhead image.

It is possible, for example, to statistically assume a region in which the vehicle is likely to accidentally contact another parked vehicle or an obstacle, derail, or the like while running along a parking route generated by setting a parking target position. For this reason, an overhead image generated from captured images is adjusted so that an attention region to which attention is to be paid at the time of running to park along the parking route determined by the attention region determining portion is included in the display overhead image displayed on the monitor. It is thus possible to view and recognize the attention region on the monitor.

Furthermore, it is preferred to eliminate a limiting condition of positioning the vehicle image in the center of the display overhead image when the attention region that should be remarked is adjusted so as to be included in the display overhead image. Thus the attention region and the vehicle image are displayed on the monitor without waste, which allows the driver to easily check the region to which attention is to be paid at the time of running to park. Moreover, an occurrence of an event such as obstacle detection is not used as a trigger for the display of the overhead image with which check of the attention region is easy and in which the vehicle image is offset from the center, and therefore, more stable parking assist is possible.

As a specific configuration that enables the attention region to be viewed and recognized on the monitor, the parking assist device according to the present invention further includes: an image trimming portion that trims the overhead image so as to display the overhead image in an overhead image display area on the monitor; and a trimming condition information generating portion that generates trimming condition information with which the vehicle image is offset from a center of the display overhead image so as to include the attention region in the display overhead image, and provides the trimming condition information to the image trimming portion.

With this configuration, the overhead image generated from the captured image is trimmed so that the attention region to which attention is to be paid is included in the display overhead image displayed on the monitor at the time of running to park along the parking route determined by the attention region determining portion. Furthermore, when the attention region that should be remarked is trimmed so as to be included in the display overhead image, a limiting condition of positioning the vehicle image in the center of the display overhead image is eliminated. It is thus possible to perform trimming to offset the vehicle image from the center of the display overhead image, and the attention region and the vehicle image are displayed on the monitor without waste, which allows the driver to easily check the region to which attention is to be paid at the time of running to park. Moreover, an occurrence of an event such as obstacle detection is not used as a trigger for the display of the overhead image with which check of the attention region is easy and in which the vehicle image is offset from the center, and therefore, more stable parking assist is possible.

Note that in the case where a plurality of attention regions exist, the most important attention region, that is, the attention region of the highest urgency can be set as the attention region that should be remarked, in accordance with the vehicle position. In other words, it is convenient to employ the configuration in which if a plurality of the attention regions exist, the attention region of the high urgency is included in the display overhead image.

As one of preferred specific examples for selecting the attention region of the high urgency that should be remarked at the time of trimming from among the plurality of attention regions, it is proposed in the present invention to set the high urgency to the attention region if the vehicle is within a predetermined distance from the attention region, that is, to set this attention region as the attention region that should be remarked. The distance between the vehicle and the attention region can be easily obtained by calculating a travel distance of the vehicle on the parking route because the vehicle runs along the set parking route, which is convenient in terms of arithmetic processing.

When the overhead image is trimmed to the display overhead image so as to include the attention region of the high urgency and the vehicle image, the trimmed display overhead image is likely to be an enlarged image, as compared with a normal display overhead image, if the overhead image is trimmed to the smallest region that includes the attention region of the high urgency and the vehicle image. Thus the overhead image in which danger is clearer is displayed on the monitor.

During curve running performed at the time of running to park based on the steering characteristics of a car or the like, corner ends of the car body significantly swing, and it is likely that these corner ends touch another vehicle or an obstacle. Accordingly, in one preferred embodiment of the present invention, the attention region determining portion is configured to determine a region in which an edge of the vehicle significantly swings out from the parking route during parking along the patching route to be the attention region.

If the vehicle has an obstacle detection function, an additional attention region can be set based on obstacle information about existence of an obstacle around the vehicle that is generated by this obstacle detecting portion. Accordingly, in such a vehicle, it is possible to employ, for the attention region determining portion, a preferred configuration in which an approach region in which the vehicle on the parking route approaches to within a predetermined distance from an obstacle is found based on the obstacle information about existence of the obstacle around the vehicle, and this approach region is additionally determined to be a special attention region. Such an attention region based on the obstacle information is considered to be more urgent, and it is therefore convenient to process it in preference to the above-mentioned attention region.

### Brief Description of the Drawings

FIG. 1 is a partial cutaway perspective vehicle view of a vehicle equipped with a parking assistance device according to the present invention.
FIG. 2 is a plan view showing image capturing ranges of a plurality of in-vehicle cameras.
FIG. 3 is a functional block diagram schematically showing part of a vehicle control system including a parking assist control unit.
FIG. 4 is an explanatory diagram schematically showing a parking route and an attention region.
FIG. 5 is a functional block diagram of an input image processing module and an output image processing module in the parking assist control unit.
FIG. 6 is an explanatory diagram schematically showing a procedure with which a display overhead image is generated from captured images through an overhead image.
FIG. 7 is a schematic diagram showing the way in which an overhead image is trimmed and displayed with normal trimming and offset trimming to generate an appropriate display image.
FIG. 8 is a schematic diagram showing enlarging offset trimming for displaying an enlarged image of an offset region.
FIG. 9 is a flowchart showing a main routine of parking assist control.
FIG. 10 is a flowchart showing a routine for determining selection of a trimming format for an overhead image.

### Description of Embodiments

Hereinafter an embodiment of the present invention will be described based on the drawings. In the present embodiment, a parking assistance device described as an example is capable of generating an overhead image in which a vehicle is viewed down from above, based on images captured by a plurality of cameras provided to the vehicle, and displaying the overhead image on a monitor.

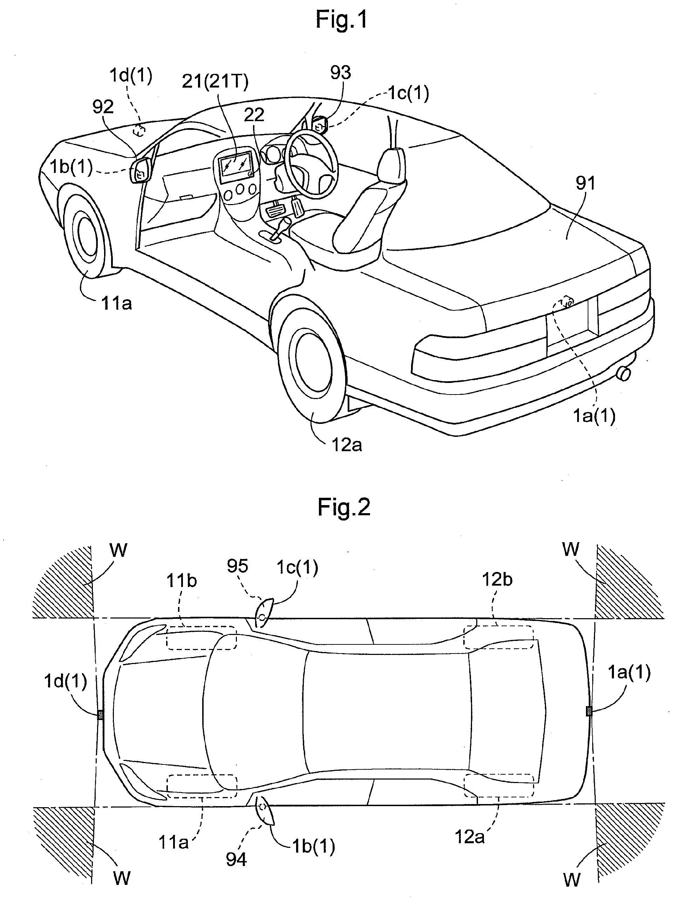

As shown in FIGS. 1 and 2, a plurality of in-vehicle cameras are installed in a vehicle in which left and right front wheels 11a and 11b are configured as steering wheels, and left and right rear wheels 12a and 12b are non-steering wheels. A back camera 1 a is provided in the back of the vehicle, that is, on a back door 91. A left side camera 1 b is provided in a lower part of a left side mirror 92 installed on a left front door, and a right side camera 1 c is provided in a lower part of a right side mirror 93 installed on a right front door. A front camera 1d is provided in the front of the vehicle,. In the following description, those cameras 1a to 1 d are collectively referred to as cameras 1 (in-vehicle cameras) as required.

Each camera 1 is a digital camera that captures 15 to 30 frames of two-dimensional images per second in time series using an image sensor such as a CCD (charge coupled device) or a CIS (CMOS image sensor), performs digital conversion, and outputs the captured images in real time. The cameras 1 have a wide-angle lens. Particularly, in the present embodiment, a horizontal viewing angle of 140 to 190 degrees is secured. The back camera 1 a and the front camera 1 d are installed on the vehicle so that their optical axes have a depression angle of about 30 degrees, and are capable of capturing images of a region covering up to approximately 8 meters from the vehicle. The left side camera 1 b and the right side camera 1 c are installed at the bottom of the side mirrors 92 and 93 so that their optical axes face downward, and their objects are part of sides of the vehicle and the road surface (ground). As shown in FIG. 2, in positions outward of left and right corner ends at the front and rear of the vehicle, overlap regions W (see FIG. 2) of images captured by two cameras are formed. When an overhead image is generated from the four images captured by the cameras 1, image processing for making boundary lines that demarcate these overlap regions W less conspicuous is performed.

For parking assistance, the images captured by the cameras 1 or a parking assistance image generated using these captured images is displayed on a monitor 21. In addition, voice parking guidance based on a parking route from a parking starting point to a target parking region is issued from a speaker 22. Check of the parking region and other operation inputs are performed through a touch panel 21 placed on the monitor 21.

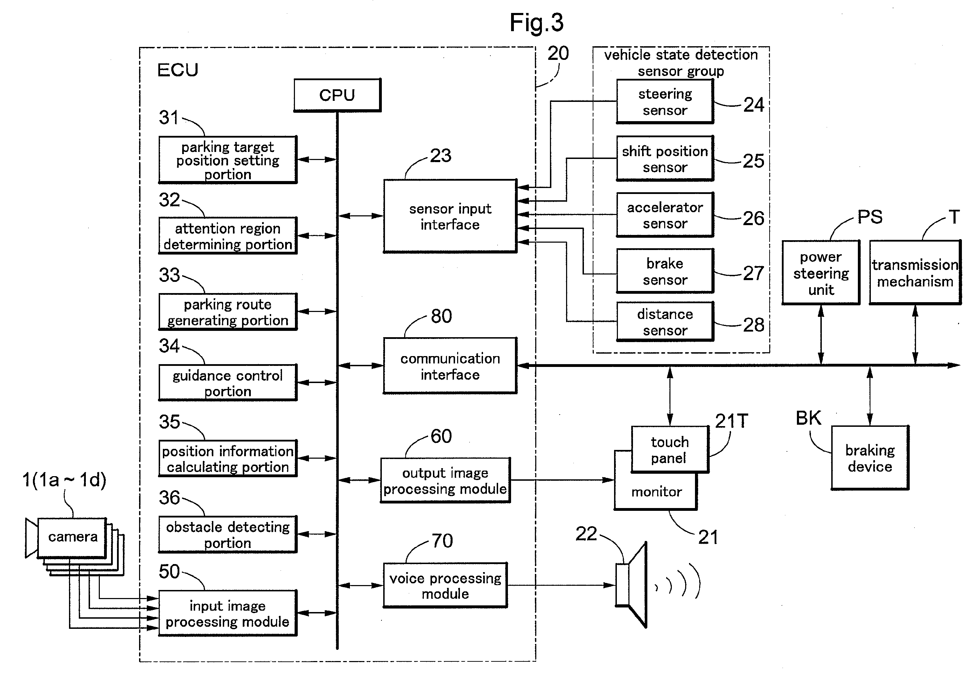

Inside the vehicle, a parking assist control unit (hereinafter simply referred to as ECU) 20, which serves as the core of the parking assistance device of the present invention, is disposed. As shown in FIG. 3, the ECU 20 includes a sensor input interface 23 and a communication interface 80 as input/output interfaces through which information is input and output, and also includes a microprocessor or a DSP (digital signal processor) that process information obtained via the input/output interfaces. Further, some or all of the input/output interfaces may be included in such processors.

The sensor input interface 23 is connected to a group of vehicle state detection sensors for detecting a driving operation and a travelling state. The vehicle state detection sensor group includes a steering sensor 24 for measuring a steering operation direction (steering direction) and an amount of operation (amount of steering), a shift position sensor 25 for determining a shift position of a shift lever, an accelerator sensor 26 for measuring an amount of operation of an accelerator pedal, a brake sensor 27 for detecting an amount of operation of a brake pedal, and a distance sensor 28 for detecting a travel distance of the vehicle.

Further, the communication interface 80 employs an in-vehicle LAN, and is connected to not only the touch panel 21T and the monitor 21 but also to control units such as a power steering unit PS, a transmission mechanism T, and a braking device BK, so as to enable data transmission.

The ECU 20 is provided with an output image processing module 60 and a voice processing module 70 that serve as notification output functional portions and are constituted by DSPs. Various kinds of image information for GUIs generated by the output image processing module 60 and captured image information containing auxiliary images for guiding the vehicle are displayed on the monitor 21. The voice guidance for guiding the vehicle generated by the voice processing module 70, an emergency alarm, and the like are issued by the speaker 22. Furthermore, the ECU 20 has an input image processing module 50, a parking target position setting portion 31, an attention region determining portion 32, a parking route generating portion 33, a guidance control portion 34, and a position information calculating portion 35. In the present embodiment, an obstacle detecting portion 36 is also provided.

The input image processing module 50 transfers a processed image obtained by processing captured images acquired by the cameras 1 to other functional portions and the output image processing module 60. The functions of the input image processing module 50 and the output image processing module 60 will be described later in detail.

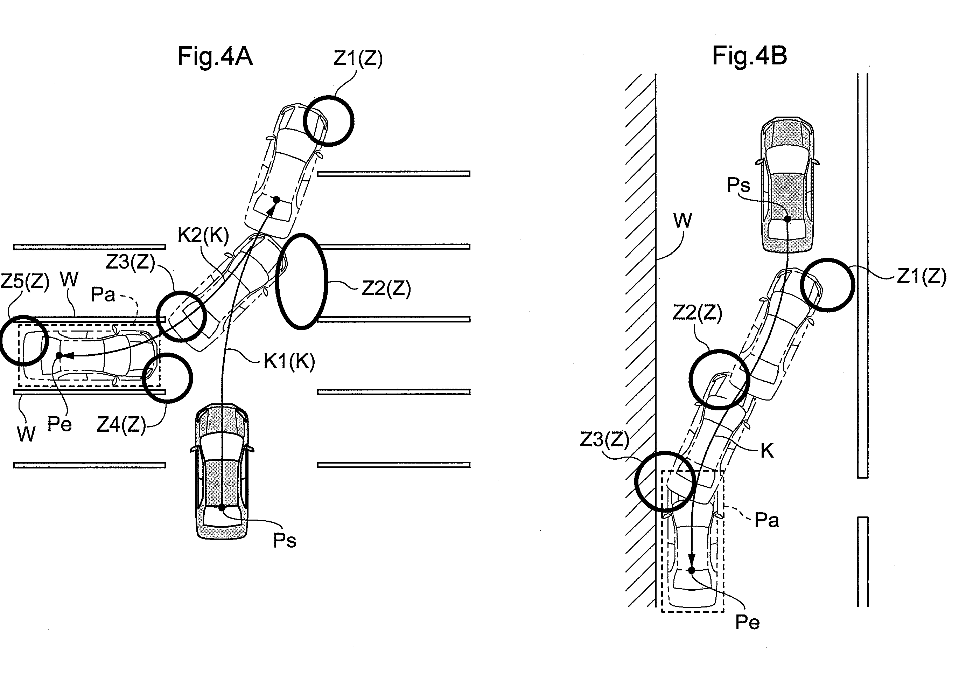

The parking target position setting portion 31 sets a parking region Pa for parking the vehicle, as shown in FIG. 4, by means of image processing or/and manual operation, based on the captured images that have been preprocessed by the input image processing module 50, and also sets a parking completion position Pe as a target parking position that serves as a destination of the running to park. In addition, the parking target position setting portion 31 has a function of setting the position of the vehicle that has stopped in order to park as a parking starting point Ps that serves as a starting point of the running to park. Note that in the example shown in FIG. 4, a region with a boundary reference, which is one or two demarcating lines W (parking demarcating lines or road shoulder boundary lines) formed on the road surface, is set as a target parking region Pa. FIG. 4A shows garage parking into a target parking region Pa whose boundaries are marked with white parking lines that are the demarcating lines W, and FIG. 4B shows parallel parking into a target parking region Pa whose boundaries are marked with the road shoulder boundary line and a vehicle width.

The parking route generating portion 33 generates a parking route K, as shown as an example in FIG. 4. This parking route K is a route connecting the parking starting point Ps to the parking completion position Pe that is the parking target position. The parking route K may partially include a straight line, or may be wholly a straight line, but can substantially be indicated by one or more curves. Note that an algorithm for generating the parking route K is conventionally known, and JP 2003-237511A, JP 2008-284969A, and the like can be referred to.

The attention region determining portion 32 determines an attention region Z to which attention is to be paid at the time of running to park along the parking route K generated by the parking route generating portion 33. In the example shown in FIG. 4A, four attention regions Z (Z1, Z2, Z3, Z4) appearing along the parking routes K1 and K2 at the time of running to park in a garage have been determined. Furthermore, in the example shown in FIG. 4B, three attention regions Z (Z1, Z2, Z3) appearing along the parking route K for parallel parking have been determined. Those attention regions Z are regions in which there is a high possibility of touching another parked vehicle or an obstacle due to a corner end of the vehicle swinging out significantly from the parking route when the center of the vehicle moves along the parking route K. The attention region determining portion 32 generates attention region information, which is list information of attention regions Z1... and the like containing coordinate positions and the like of the determined attention regions Z, and transmits the attention region information to the output image processing module.

The position information calculating portion 35 acquires, when the vehicle is moving, the current vehicle position and the position of the target parking region Pa relative to the vehicle that are necessary for guiding the vehicle. In other words, the position information calculating portion 35 performs vehicle position detection processing for detecting information on the vehicle position that changes with vehicle movement, and parking target position detection processing for detecting a relative positional relationship with the target parking region Pa that changes with the vehicle movement. The above processing is performed based on the captured images acquired by the cameras 1, the amount of vehicle movement acquired by the distance sensor 28, and the steering amount of a steering wheel 34 measured by the steering sensor 24.

The guidance control portion 34 guides parking based on a direct parking route K generated by the parking route generating portion 33. At this time, the position information from the position information calculating portion 35 is referred to. The guidance control portion 34 can realize control for allowing the vehicle to run along the parking route K under guidance control, while referring to the position information from the position information calculating portion 35. However, manual steering may be partially incorporated, such as in the case where automatic steering by which the guidance control portion 34 controls the power steering unit PS, the transmission mechanism T, and the braking device BK is limited to reversing, and running forward is manually operated. In any case, it is preferred that the guidance control portion 34 transmits the guidance information to the output image processing module 60 and the voice processing module 70, and thereby causes the steering direction and the steering amount to be displayed on the monitor 21, and causes the steering direction and the steering amount to be output from the speaker 22.

The obstacle detecting portion 36, which is well-known and whose detailed description is thus omitted, detects an object (obstacle) existing in the vicinity of the vehicle using distance measurement processing and image recognition processing. Therefore, it is connected to a plurality of ultrasonic sensors, which are not shown here, disposed at both ends and the center in the front, rear, left, and right parts of the vehicle. Note that instead of the ultrasonic sensors, other object detection sensors such as laser radars may be used. The obstacle detecting portion 36 is capable of not only estimating the distance from the vehicle to the object and the size of the object by processing return time and amplitude of reflected waves at the respective ultrasonic sensors, but also estimating movement of the object and the outer shape thereof in a horizontal direction by chronologically processing the detection result of all the ultrasonic sensors. The obstacle detecting portion 36 generates obstacle information about the existence of an obstacle around the vehicle, and transmits the obstacle information to the attention region determining portion 32. The attention region determining portion 32 can extract, based on the obstacle information, an approach region in which the vehicle on the parking route K approaches to within a predetermined distance from the obstacle, additionally determine the approach region as a special attention region, and generate attention region information that is preferentially processed.

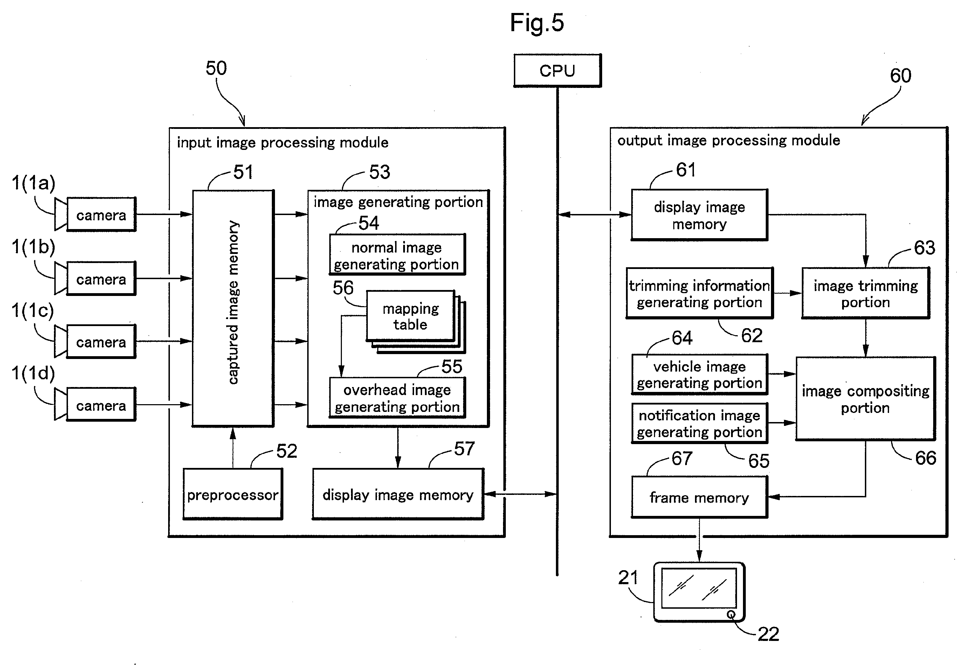

FIG. 5 shows a functional block diagram of the input image processing module 50 and the output image processing module 60 in the ECU 20. The input image processing module 50 has a function of generating an overhead image from the captured images acquired by the cameras that capture images of the surroundings of the vehicle by performing viewpoint conversion into a viewpoint above the vehicle. The output image processing module 60 trims the overhead image generated by the input image processing module 50 based on the above-described attention region information, and generates a display overhead image that fits an overhead image display area on the monitor.

The input image processing module 50 includes a captured image memory 51, a preprocessor 52, an image generating portion 53, and a display image memory 57. The captured images acquired by the cameras 1 are deployed in the captured image memory 51, and the preprocessor 52 adjusts brightness balance, color balance, and the like among the captured images separately acquired by the four cameras 1 a to 1 d, and divides the captured images with appropriate image boundary lines. The image generating portion 53 includes a normal image generating portion 54, an overhead image generating portion 55, and a mapping table 56. The normal image generating portion 54 adjusts the image quality of the captured images so that they can be displayed as they are as vehicle surroundings images on the monitor. The vehicle surroundings images of the cameras 1 a to 1 d displayed on the monitor are independent from each other, and which vehicle surroundings image to display on the monitor can be arbitrarily selected.

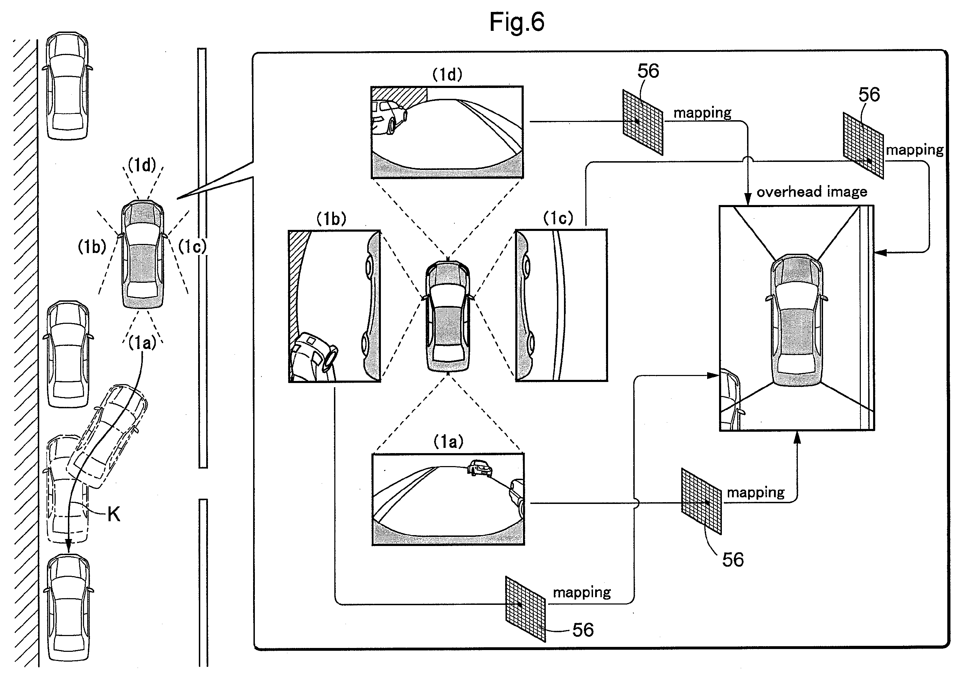

The overhead image generating portion 55 converts the captured images deployed in the captured image memory 51 into an overhead image of the surroundings of the vehicle taken from above, based on conversion information stored in the mapping table 56, and stores the overhead image in the display image memory 57. The mapping table 56 can be configured in various form, but it is convenient to configure the mapping table 56 as a table in which correspondence between pixel data of the captured images and pixel data of the overhead image is described, and in which destination pixel coordinates in the overhead image is described for each pixel of a one-frame captured image. FIG. 6 schematically shows the way in which four captured images are converted into an overhead image at the time of parallel parking. A rear captured image that is an image captured by the back camera 1 a is subjected to coordinate conversion using the mapping 56 into a rear region image of the overhead image. A front captured image that is an image captured by the front camera 1 d is subjected to coordinate conversion using the mapping 56 into a front region image of the overhead image. A left side captured image that is an image captured by the left side camera 1 b is subjected to coordinate conversion using the mapping 56 into a left region image of the overhead image. A right side captured image that is an image captured by the right side camera 1c is subjected to coordinate conversion using the mapping table 56 into a right region image of the overhead image. Therefore, the mapping table 56 is provided with four different overhead image mapping tables for converting the images captured by the respective cameras into an overhead image. Such overhead image generation using four captured images is sequentially performed while the vehicle is running along the parking route K, and the overhead image is displayed on the monitor in an appropriately trimmed form.

The output image processing module 60 includes a display image memory 61, a trimming information generating portion 62, an image trimming portion 63, a vehicle image generating portion 64, a notification image generating portion 65, an image compositing portion 66, and a frame memory 67. The display image memory 61 is a memory for temporarily storing the overhead image from the input image processing module 50, and may also be used as the display image memory 57 in the input image processing module 50. The image trimming portion 63 trims the overhead image deployed in the display image memory 61 so as to display the overhead image in the overhead image display area on the monitor 21. The image compositing portion 66 generates the display overhead image by compositing, on the trimmed overhead image, a vehicle image prepared by the vehicle image generating portion 64 and a notification image obtained by converting notification information such as a parking guidance message into an image with the notification image generating portion 65. The trimming condition information generating portion 62 generates trimming condition information (content of special trimming processing to be performed) for performing trimming so as to include attention regions Z that are within a predetermined distance from the vehicle position in the display overhead image, based on the attention region information transmitted from the attention region determining portion 32, and provides the trimming condition information to the image trimming portion 63. At this time, it is also possible to generate enlargement trimming condition information with which enlarged display is enabled by trimming to the smallest region that includes the attention regions Z and the vehicle image.

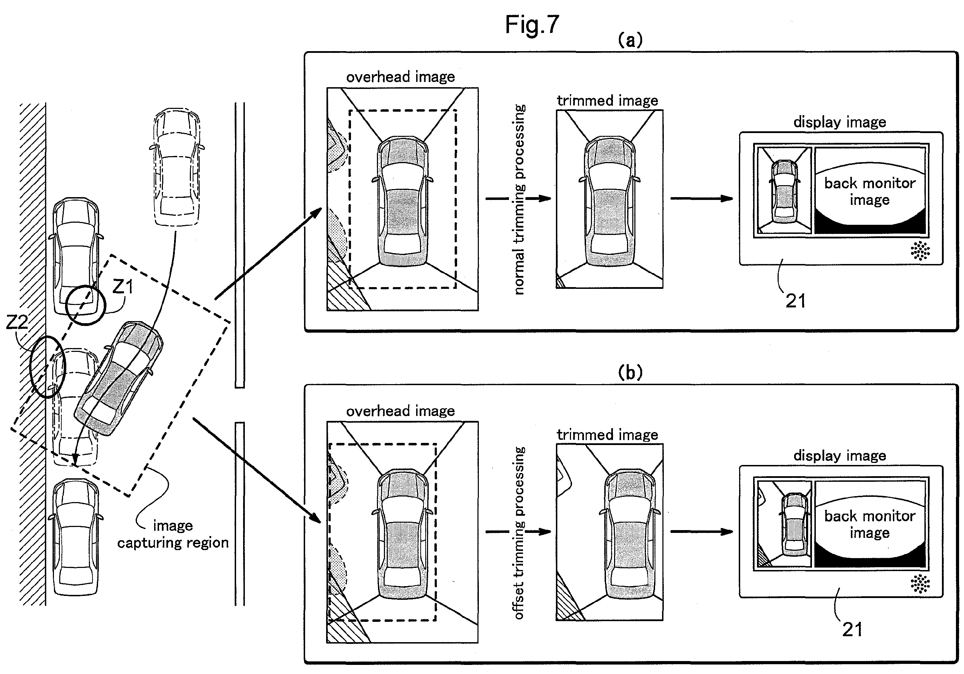

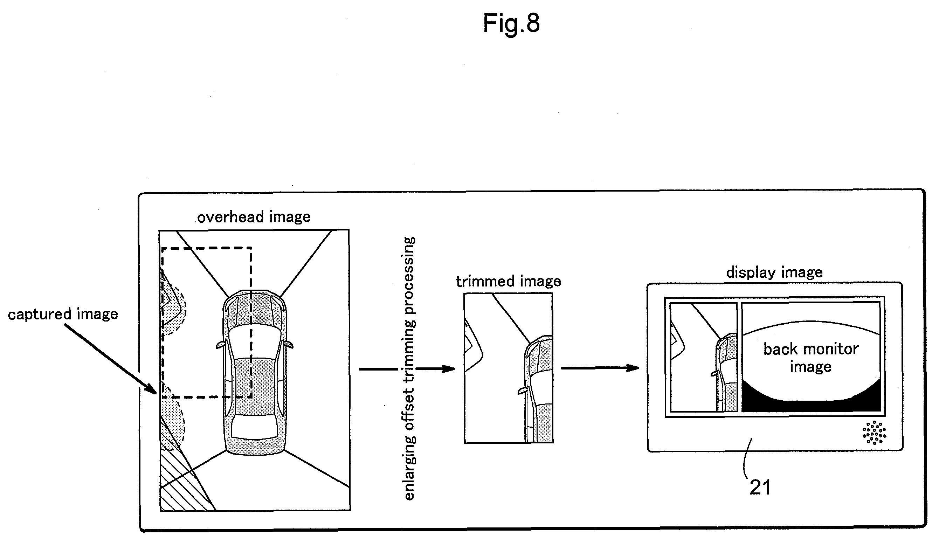

The way in which the trimming of the overhead image at the vehicle position at which the attention regions Z are included within the predetermined distance is performed is schematically shown in FIG. 7. FIG. 7(a) shows conventional trimming processing (which is here referred to as normal trimming processing) for positioning the vehicle image in the center of the display overhead image, for the purpose of comparison. This normal trimming processing is trimming processing in the case where there is no attention region Z that should be remarked, that is, no attention region Z within the predetermined distance from the vehicle position. FIG. 7(b) shows trimming processing (special trimming processing) in the case where the attention regions Z are included within the predetermined distance from the vehicle position. Here, trimming is performed with a trimming region in which the attention region Z that should be remarked is located on the lower left corner and the vehicle image is located on the upper right corner. In other words, a trimming frame indicated by a dotted line is offset in the direction in which the attention region exists from the center of the overhead image, that is, the vehicle position. Thus, in the display overhead image that is finally displayed on the monitor, attention regions and, in some cases, obstacles (such as another vehicle) that the vehicle could possibly touches are displayed together with the vehicle, which is convenient for the driver. Furthermore, in the example shown in FIG. 8, a trimming frame that has been contracted to the smallest region that includes the attention regions Z and the vehicle position is used. As a result, the display overhead image displayed on the monitor is an enlarged image, which can provide the driver with more accurate attention region information.

Note that as shown in FIGS. 7 and 8, the screen of the monitor 21 is divided into the overhead image display area for displaying the display overhead image and a captured image area for displaying the captured images (e.g., a captured image in a vehicle travelling direction) acquired by the cameras 1.

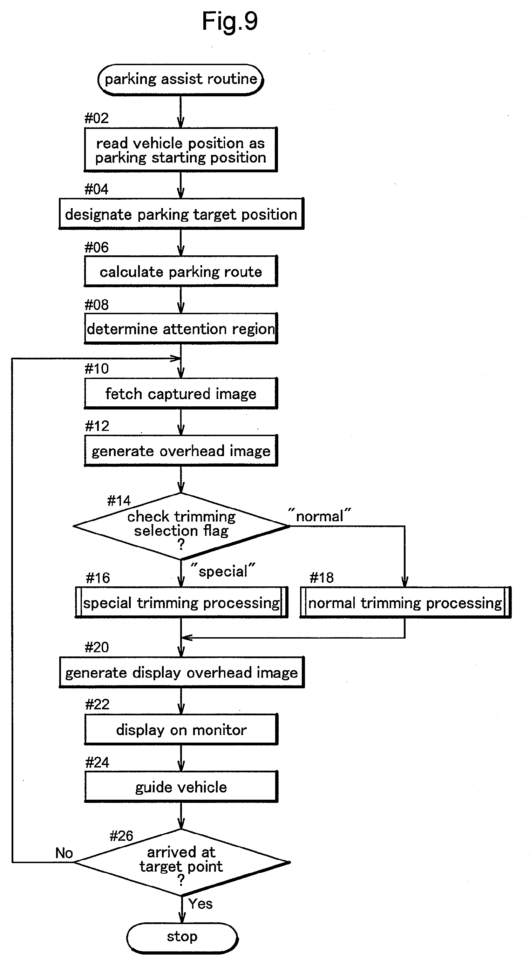

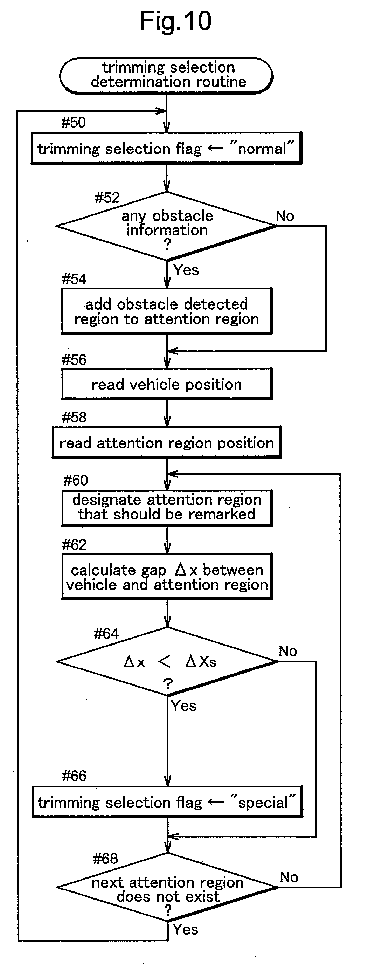

Next, the flow of the parking assist control by the parking assistance device configured as described above will be described using the flowcharts of FIGS. 9 and 10. FIG. 9 is a flowchart showing the main routine of the parking assist control, and FIG. 10 is a flowchart showing a routine for determining selection of the trimming format for the overhead image.

If reverse parking is performed under the parking assist control, the vehicle is stopped at a position in the vicinity of a parking space, the position of the stopped vehicle is read as the parking starting position (#02), and this parking space is designated as the parking target position (#04). A parking route between the parking starting position and the parking target position is calculated (#06). After the parking route is determined, determination processing is performed for setting a place where part of the vehicle is likely to touch an obstacle or the like as the attention region, based on the form of this parking route, particularly on the variation in curvature with progression along the route (#08). For example, if an obstacle or the like exists around the vehicle when the vehicle moves along the parking route, a region in which the vehicle is likely to touch the obstacle can be statistically estimated. To perform an estimate with a higher reliability, of course it is necessary to further consider the condition of whether the vehicle is running backward or forward and the characteristics of the vehicle, particularly a steering characteristic. In any case, determination of the attention region can be easily achieved by assuming in advance a number of parking route patterns, estimating a surrounding region to which attention is to be paid based on the possibility of touching at vehicle route positions in each parking route pattern, and assigning this surrounding region. The attention region determined by this determination processing is stored together with its position and size on an attention region list.

After the attention region is determined (#08), captured images are fetched (#10), and an overhead image is generated from this captured image (#12). Next, trimming processing is performed on the generated overhead image. If the entire generated overhead image is displayed on the monitor screen, a problem arises in that the overhead image displayed on the overhead image display area allocated within a limited monitor screen size is too small to see clearly. To solve this, in the present invention, trimming processing is performed on the overhead image. The type of trimming processing to be used is written on a trimming selection flag, which will be described later in detail using FIG. 10, and the content of this trimming selection flag is checked (#14). In the present embodiment, special trimming processing (#16) performed if the content of the trimming selection flag is "special" and normal trimming processing (#18) performed if the content of the trimming selection flag is "normal" are incorporated. Note that attention regions to be a target of the special trimming processing are identifiably marked on the attention region list, and trimming processing is performed so that the marked attention regions are clearly displayed.

After either trimming processing is finished, the display overhead image is generated using the trimmed overhead image (#20), and is displayed on the monitor 21 (#22). Upon vehicle guidance being started, a notification message such as a vehicle guidance message serving as parking assistance is also displayed on the monitor 21 (#24). After running is performed for a predetermined distance, it is checked whether or not the vehicle has arrived at the parking target point (#26). If the vehicle has not arrived at the parking target point (#26 "No" branch), an overhead image is generated with new captured images, and processing returns to step #10 to continue vehicle guidance while displaying this overhead image on the monitor. If the vehicle has arrived at the parking target point (#26 "Yes" branch), the vehicle stops, and this parking assistance routine is finished.

Next, the trimming selection determination routine for setting the type of trimming processing for the above-mentioned trimming selection flag will be described with reference to the flowchart of FIG. 10.

First, "normal", which indicates that the normal trimming processing is performed, is assigned to the trimming selection flag (#50). Further, it is checked whether or not the obstacle information has been generated and output by the obstacle detection portion 36 (#52). If the obstacle information exists (#52 "Yes" branch), the region of the obstacle contained in the obstacle information is regarded as an attention region of high urgency and added as an important attention region to the attention region list (#54). Thereafter, or if no obstacle information exists (#52 "No" branch), the current vehicle position is read (#56). Further, the attention region is read out from the attention region list, and its position is assigned to a predetermined variable (#58).

Usually a plurality of attention regions are read out from the attention region list, and therefore, these attention regions are sequentially designated one by one as the attention regions that should be remarked to perform the following determination processing (#60). First, a shortest gap: Δx between the vehicle and the attention region is calculated (#62). Further, it is checked whether the gap: Δx is smaller than a predetermined threshold value ΔXs (Δx<ΔXs) (#64). Note that if the attention region is an important attention region, it is convenient to set a large threshold value: ΔXs.

If Δx<ΔXs holds (#64 "Yes" branch), "special", which indicates that the special trimming processing is performed, is assigned to the trimming selection flag (#66), and this attention region that should be remarked is marked as a target of the special trimming in the attention region list.

Note that if the attention region to be the target of the special trimming at a single vehicle position is limited to only one, this determination processing can be finished at the stage where "special" is assigned to the trimming selection flag. However, if it is also considered that a plurality of attention regions to be the subjects of the special trimming will be determined at one vehicle position, the gap: Δx is written into the attention region list at the stage where "special" is assigned to the trimming selection flag, at the stage where the target of the special trimming are marked in the attention region list. Then, if a new attention region for which Δx<ΔXs is true is found, the attention region with the shorter gap: Δx can be overwritten to mark this attention region as the target of the special trimming. Moreover, an important attention region can also be preferentially marked as the target of the special trimming.

If Δx<ΔXs does not hold (#64 "No" branch), it is further checked whether or not a next attention region does not exist for which processing should be performed (#68). If the next attention region exists for which the processing should be performed (#68 "No" branch), the processing returns to step #60, and the same processing is performed on the next attention region as the attention region that should be remarked. If a next attention region does not exist for which the processing should be performed (#68 "Yes" branch), the processing returns to step #50 to repeat this routine.

### Another embodiment

Although in the above-described embodiment a detected region in which an obstacle exists is included as an attention region, the present invention is not limited to a vehicle having such an obstacle detection function. Even in a vehicle that does not have an obstacle detection function, being able to display a better parking assistance image on the monitor by estimating attention regions such as those described above from the parking route in advance is important.

### Industrial Applicability

The present invention can be used in parking assistance devices that assist the driving operation of a driver by displaying an overhead image for allowing the driver to recognize the conditions around the vehicle at the time of running to park.

### List of Reference Numerals

- 1: Camera
- 31: Parking target position setting portion
- 33: Attention region determining portion
- 32: Parking route generating portion
- 34: Guidance control portion
- 35: Position information calculating portion
- 36: Obstacle detecting portion
- 50: Input image processing module
- 51: Captured image memory
- 53: Image generating portion
- 57: Display image memory
- 60: Output image processing module
- 62: Attention region designating portion
- 63: Trimming condition information generating portion
- 62: Trimming information generating portion
- 63: Image trimming portion
- 64: Vehicle image generating portion
- 65: Notification image generating portion
- 66: Image compositing portion
- 67: Frame memory

## Claims

1. A parking assistance device comprising:
an overhead image generating portion (**55**) that generates an overhead image through viewpoint conversion from a captured image acquired by a camera (**1**) that captures an image of surroundings of a vehicle; and
a parking route generating portion (**33**) that generates a parking route (**K**) to a set parking target position;
**characterized by**
an attention region determining portion (**32**) that determines an attention region (**Z**) to which attention is to be paid at the time of running to park based on a variation in curvature with progression along the parking route (**K**) and in which a corner end of the vehicle swings out significantly from the parking route when the center of the vehicle moves along the parking route (k) and there is a higher possibility of the vehicle's touching with a nearby object and
an image compositing portion (**66**) that inputs, as a display image of the surroundings of the vehicle to be displayed on a monitor (**21**), an overhead image including the attention region (**Z**) that is in the overhead image generated by the overhead image generating portion (**55**), and generates a display overhead image by compositing a vehicle image at a vehicle position in the input overhead image.

2. The parking assistance device according to claim 1, wherein when a plurality of the attention regions (**Z**) exist, an attention region (**Z**) of high urgency is included in the display overhead image.

3. The parking assistance device according to claim 2, wherein the high urgency is set in a case where the vehicle is within a predetermined distance from the attention region (**Z**).

4. The parking assistance device according to claim 2 or 3, wherein the overhead image is trimmed to a smallest region that includes the attention region (**Z**) of the high urgency and the vehicle image so that the display overhead image is an enlarged image.

5. The parking assistance device according to claim 1, further comprising:
an image trimming portion (**63**) that trims the overhead image so as to display the overhead image in an overhead image display area on the monitor (**21**); and
a trimming condition information generating portion (**62**) that generates trimming condition information with which the vehicle image is offset from a center of the display overhead image so as to include the attention region (**Z**) in the display overhead image, and provides the trimming condition information to the image trimming portion (**63**).

6. The parking assistance device according to claim 5, wherein when a plurality of the attention regions (**Z**) exist, the trimming condition information generating portion (**62**) calculates an urgency of the attention regions (**Z**), and generates the trimming condition information so that the attention region (**Z**) of highest urgency is included in the display overhead image.

7. The parking assistance device according to claim 6, wherein the trimming condition information generating portion (**62**) calculates the urgency based on a distance between the vehicle and the attention regions (**Z**).

8. The parking assistance device according to claim 6 or 7, wherein the trimming condition information generating portion (**62**) generates the trimming condition information so that the display overhead image is an enlarged image.

9. The parking assistance device according to any one of claims 1 to 8, wherein the attention region determining portion (**32**) determines a region in which an edge of the vehicle significantly swings out from the parking route at the time of running to park along the parking route to be the attention region (**Z**).

10. The parking assistance device according to any one of claims 1 to 9, wherein the attention region determining portion (**32**) obtains an approach region in which the vehicle on the parking route approaches to within a predetermined distance from an obstacle, based on obstacle information about an existence of an obstacle around the vehicle, and additionally determines the approach region as a special attention region.

## Patentansprüche

1. Parkassistenzvorrichtung mit
einem Draufsichtbilderzeugungsabschnitt (**55**), der ein Draufsichtbild durch eine Beobachtungspunktumwandlung aus einem aufgenommen Bild, das von einer Kamera (**1**) beschafft wird, die ein Bild der Umgebung eines Fahrzeugs aufnimmt, und
einem Parkroutenerzeugungsabschnitt (**33**), der eine Parkroute (**K**) zu einer eingestellten Parkzielposition erzeugt,
**gekennzeichnet durch**
einen Aufmerksamkeitsregionsbestimmungsabschnitt (**32**), der auf der Grundlage einer Variation in einer Krümmung mit Fortschreiten entlang der Parkroute (**K**) eine Aufmerksamkeitsregion (**Z**) bestimmt, auf die bei Fahren zum Parken Aufmerksamkeit zu widmen ist, und in der ein Eckenende des Fahrzeugs signifikant aus der Parkroute schwenkt, wenn die Mitte des Fahrzeugs sich entlang der Parkroute (**K**) bewegt und es eine höhere Wahrscheinlichkeit gibt, dass das Fahrzeug ein nahliegendes Objekt berührt, und
einem Bildzusammensetzungsabschnitt (**66**), der ein als auf einem Monitor (**21**) anzuzeigendes Anzeigebild der Umgebung des Fahrzeugs ein Draufsichtbild mit der Aufmerksamkeitsregion (**Z**) empfängt, das das Draufsichtbild ist, das **durch** den Draufsichtbilderzeugungsabschnitt (**55**) erzeugt wird, und ein Anzeigedraufsichtbild **durch** Zusammensetzen eines Fahrzeugbildes an einer Fahrzeugposition in dem empfangenen Draufsichtbild erzeugt.

2. Parkassistenzvorrichtung nach Anspruch 1, wobei, wenn eine Vielzahl der Aufmerksamkeitsregionen (**Z**) existiert, eine Aufmerksamkeitsregion (**Z**) höchster Dringlichkeit in das Anzeigedraufsichtbild einbezogen wird.

3. Parkassistenzvorrichtung nach Anspruch 2, wobei die höchste Dringlichkeit in einem Fall eingestellt wird, in dem das Fahrzeug sich innerhalb eines vorbestimmten Abstands von der Aufmerksamkeitsregion (**Z**) befindet.

4. Parkassistenzvorrichtung nach Anspruch 2 oder 3, wobei das Draufsichtbild auf eine kleinste Region zugeschnitten wird, die die Aufmerksamkeitsregion (**Z**) höchster Dringlichkeit und das Fahrzeugbild derart aufweist, dass das Anzeigedraufsichtbild ein vergrößertes Bild ist.

5. Parkassistenzvorrichtung nach Anspruch 1 weiterhin mit
einem Bildzuschneideabschnitt (**63**), der das Draufsichtbild derart zuschneidet, dass das Draufsichtbild in einem Draufsichtbildanzeigebereich auf dem Monitor (**21**) angezeigt wird, und
einem Zuschneidebedingungsinformationserzeugungsabschnitt (**62**), der Zuschneidebedingungsinformationen erzeugt, mit denen das Fahrzeugbild von einer Mitte des Anzeigedraufsichtbildes versetzt wird, damit die Aufmerksamkeitsregion (**Z**) in dem Anzeigedraufsichtbild einbezogen wird, und die Zuschneidebedingungsinformationen dem Bildzuschneideabschnitt (**63**) bereitstellt.

6. Parkassistenzvorrichtung nach Anspruch 5, wobei, wenn eine Vielzahl der Aufmerksamkeitsregionen (**Z**) vorhanden ist, der Zuschneidebedingungsinformationserzeugungsabschnitt (**62**) eine Dringlichkeit der Aufmerksamkeitsregionen (**Z**) berechnet, und die Zuschneidebedingungsinformationen derart erzeugt, dass die Aufmerksamkeitsregion (**Z**) höchster Dringlichkeit in dem Anzeigedraufsichtbild einbezogen wird.

7. Parkassistenzvorrichtung nach Anspruch 6, wobei der Zuschneidebedingungsinformationserzeugungsabschnitt (**62**) die Dringlichkeit auf der Grundlage eines Abstands zwischen dem Fahrzeug und den Dringlichkeitsregionen (**Z**) berechnet.

8. Parkassistenzvorrichtung nach Anspruch 6 oder 7, wobei der Zuschneidebedingungsinformationserzeugungsabschnitt (**62**) die Zuschneidebedingungsinformationen derart erzeugt, dass das Anzeigedraufsichtbild ein vergrößertes Bild ist.

9. Parkassistenzvorrichtung nach einem der Ansprüche 1 bis 8, wobei der Aufmerksamkeitsregionsbestimmungsabschnitt (**32**) eine Region, in der eine Kante des Fahrzeugs signifikant aus der Parkroute während des Fahrens zum Parken entlang der Parkroute ausschwenkt, als die Aufmerksamkeitsregion (**Z**) bestimmt.

10. Parkassistenzvorrichtung nach einem der Ansprüche 1 bis 9, wobei der Aufmerksamkeitsregionsbestimmungsabschnitt (**32**) eine Annäherungsregion, in der das Fahrzeug auf der Parkroute sich auf innerhalb eines vorbestimmten Abstands einem Hindernis annähert, auf der Grundlage von Hindernisinformationen bezüglich des Vorhandenseins eines Hindernisses um das Fahrzeug herum ermittelt, und zusätzlich die Annäherungsregion als eine spezielle Aufmerksamkeitsregion bestimmt.

## Revendications

1. Dispositif d'aide au stationnement qui comprend :
une partie de génération d'image vue de dessus (55) qui génère une image vue de dessus par le biais d'une conversion de point de vue à partir d'une image capturée acquise par une caméra (1) qui capture une image de l'environnement d'un véhicule ; et
une partie de génération de trajet de stationnement (33) qui génère un trajet de stationnement (K) jusqu'à un emplacement cible de stationnement défini ;
**caractérisé par**
une partie de détermination de zone d'attention (32) qui détermine une zone d'attention (Z) à laquelle une attention doit être portée au moment du stationnement, sur la base d'une variation de courbure au fur et à mesure de la progression le long du trajet de stationnement (K), et dans laquelle une extrémité d'angle du véhicule pivote de manière significative en-dehors du trajet de stationnement lorsque le centre du véhicule se déplace le long du trajet de stationnement (K), et lorsqu'il existe une probabilité plus forte que le véhicule touche un objet situé à proximité, et
une partie de composition d'image (66) qui fournit, en guise d'image de l'environnement du véhicule à afficher sur un écran (21), une image vue de dessus qui comprend la zone d'attention (Z) qui se trouve sur l'image vue de dessus générée par la partie de génération d'image vue de dessus (55), et qui génère une image vue de dessus en composant une image du véhicule à un emplacement du véhicule sur l'image vue de dessus fournie.

2. Dispositif d'aide au stationnement selon la revendication 1, dans lequel, lorsque plusieurs zones d'attention (Z) existent, une zone d'attention (Z) à degré d'urgence élevé est incluse dans l'image vue de dessus à afficher.

3. Dispositif d'aide au stationnement selon la revendication 2, dans lequel le degré d'urgence élevé est défini lorsque le véhicule se trouve à une distance prédéterminée de la zone d'attention (Z).

4. Dispositif d'aide au stationnement selon la revendication 2 ou 3, dans lequel l'image vue de dessus est réduite à une zone plus petite qui comprend la zone d'attention (Z) à degré d'urgence élevé et l'image du véhicule de sorte que l'image vue de dessus à afficher soit une image agrandie.

5. Dispositif d'aide au stationnement selon la revendication 1, qui comprend en outre :
une partie de réduction d'image (63) qui réduit l'image vue de dessus de façon à afficher l'image vue de dessus dans une zone d'affichage d'image vue de dessus sur l'écran (21) ; et
une partie de génération d'informations de condition de réduction (62) qui génère des informations de condition de réduction avec lesquelles l'image du véhicule est décalée d'un centre de l'image vue de dessus à afficher de façon à inclure la zone d'attention (Z) dans l'image vue de dessus à afficher, et fournit les informations de condition de réduction à la partie de réduction d'image (63).

6. Dispositif d'aide au stationnement selon la revendication 5, dans lequel, lorsque plusieurs zones d'attention (Z) existent, la partie de génération d'informations de condition de réduction (62) calcule un degré d'urgence des zones d'attention (Z), et génère les informations de condition de réduction de sorte que la zone d'attention (Z) qui présente le degré d'urgence le plus élevé soit incluse dans l'image vue de dessus à afficher.

7. Dispositif d'aide au stationnement selon la revendication 6, dans lequel la partie de génération d'informations de condition de réduction (62) calcule le degré d'urgence sur la base d'une distance entre le véhicule et les zones d'attention (Z).

8. Dispositif d'aide au stationnement selon la revendication 6 ou 7, dans lequel la partie de génération d'informations de condition de réduction (62) génère les informations de condition de réduction de sorte que l'image vue de dessus à afficher soit une image agrandie.

9. Dispositif d'aide au stationnement selon l'une quelconque des revendications 1 à 8, dans lequel la partie de détermination de zone d'attention (32) détermine une zone dans laquelle un bord du véhicule pivote de manière significative en-dehors du trajet de stationnement au moment du stationnement le long du trajet de stationnement qui est la zone d'attention (Z).

10. Dispositif d'aide au stationnement selon l'une quelconque des revendications 1 à 9, dans lequel la partie de détermination de zone d'attention (32) obtient une zone d'approche dans laquelle le véhicule qui se trouve sur le trajet de stationnement s'approche d'un obstacle à une distance prédéterminée, sur la base d'informations d'obstacle à propos de l'existence d'un obstacle autour du véhicule, et détermine en outre la zone d'approche comme étant une zone d'attention spéciale.
